# DEMANDE DE BREVET EUROPEEN

(11) **EP 0 943 495 A1**
(43) Date de publication de la demande: **22.09.1999**
(21) Numéro de dépôt: 99420069.9
(22) Date de dépôt: 11.03.1999
(51) Int. Cl.: B60R 9/06, B60R 9/10

(54) **Dispositif d'attache et de fixation de plateforme support d'articles sur des boules d'attelage**

(30) Priorité: 16.03.1998 FR 9803405
(71) Demandeur: Fiol-Vitansel S.A., 42140 Chazelles sur Lyon (FR)
(72) Inventeur: Henriot, Luc, Cuzieu, 42330 Saint Galmier (FR)
(74) Mandataire: Dupuis, François

(57) **Abrégé**

Le dispositif est remarquable en ce qu'il comprend un corps de forme parallélépipèdique creux intérieurement présentant dans sa partie basse une face de côté agencée avec une ouverture profilée autorisant le passage et la pénétration d'une boule d'attelage , et sur sa face avant une forme profilée formant chapeau susceptible de venir chevaucher et s'appuyer sur la partie plate-forme de la boule d'attelage. L'ouverture dudit corps est introduit un étrier de configuration volumétrique parallélépipédique de plus petite hauteur et susceptible de coulisser à l'intérieur dudit corps. Le coulissement est obtenu par un volant de manoeuvre associé à une tige filetée traversant la partie supérieure du corps, étant solidarisée à l'étrier pour assurer un déplacement relatif du corps par rapport à l'étrier. Ledit étrier présente sur sa face latérale une ouverture, et sur sa face de fond une découpe permettant l'introduction autour de la boule d'attelage afin de la coiffer en totalité. La manipulation du volant de manoeuvre entraîne le blocage du corps de l'étrier sur la boule par effet de traction et le positionnement de la forme en saillie formant chapeau sur ladite plate-forme de la zone d'attelage dans un double appui supplémentaire.

## Description

L'invention se rattache au secteur technique des équipements adaptables sur des boules d'attelage montées sur des véhicules automobiles, camping-cars et autres. Les équipement sont du type porte-vélo, par exemple.

Le concept de positionnement d'un porte-vélo à l'arrière d'un véhicule est bien connu. Diverses solutions techniques ont déjà été proposées se fixant sur la boule d'attelage. Un des inconvénients rencontrés réside dans l'absence de sécurité de ces dispositifs car ils peuvent être très facilement enlevés et volés. Un autre inconvénient réside dans une stabilité très incertaine de la liaison et fixation due à un montage rapide qui trouve ses limites.

Le but recherché selon l'invention était de réaliser un nouveau dispositif qui remédie aux inconvénients précités et qui offre à l'utilisateur une meilleure sécurité contre le vol. Un autre but recherché selon l'invention était d'améliorer la stabilité de la plate-forme porte-vélo. Un autre but encore était de concevoir un dispositif qui permette le relevage de la plate-forme porte-vélo en cas de non utilisation.

Ces buts et d'autres encore ressortiront bien de la suite de la description.

Selon une première caractéristique de l'invention, le dispositif d'attache et de fixation de plate-formes ou supports d'articles sur des boules d'attelage, est caractérisé en ce qu'il comprend un corps de forme parallélépipèdique creux intérieurement présentant dans sa partie basse une face de côté agencée avec une ouverture profilée autorisant le passage et la pénétration d'une boule d'attelage, et sur sa face avant une forme profilée formant chapeau susceptible de venir chevaucher et s'appuyer sur la partie plate-forme de la boule d'attelage, et en ce que par l'ouverture dudit corps est introduit un étrier de configuration volumétrique parallélépipédique de plus petite hauteur et susceptible de coulisser à l'intérieur dudit corps, et en ce que le coulissement est obtenu par un volant de manoeuvre associé à une tige filetée traversant la partie supérieure du corps, étant solidarisée à l'étrier pour assurer un déplacement relatif du corps par rapport à l'étrier, et en ce que ledit étrier présente sur sa face latérale une ouverture, et sur sa face de fond une découpe permettant l'introduction autour de la boule d'attelage afin de la coiffer en totalité, et en ce que la manipulation du volant de manoeuvre entraîne le blocage du corps et de l'étrier sur la boule par effet de traction et le positionnement de la forme en saillie formant chapeau sur ladite plate-forme de la zone d'attelage dans un double appui supplémentaire.

Ces caractéristiques et d'autres encore ressortiront bien de la suite de la description.

Pour fixer l'objet de l'invention illustré d'une manière non limitative aux figures des dessins où :

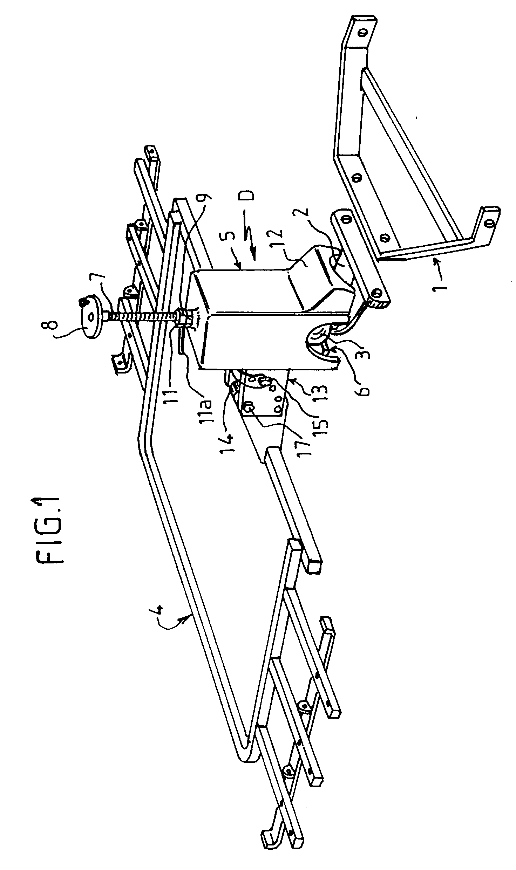

- La figure 1 est une vue à grande échelle et en perspective illustrant l'application du dispositif de l'invention sur une boule d'attelage conventionnelle pour le support d'un porte-vélo.

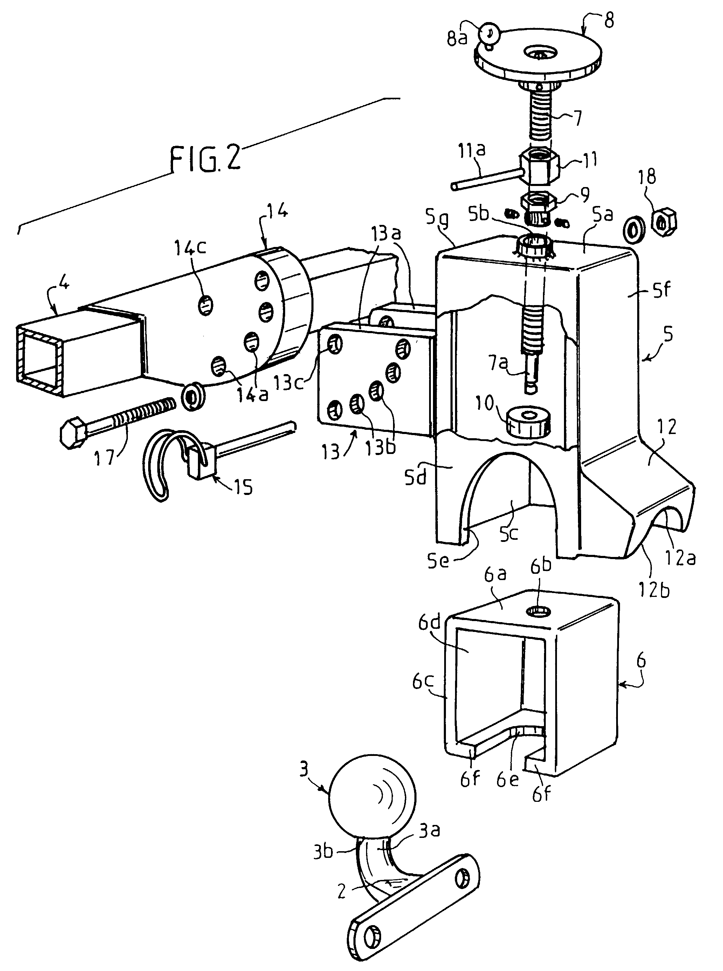

- La figure 2 est une vue en perspective éclatée avant montage du dispositif de l'invention.

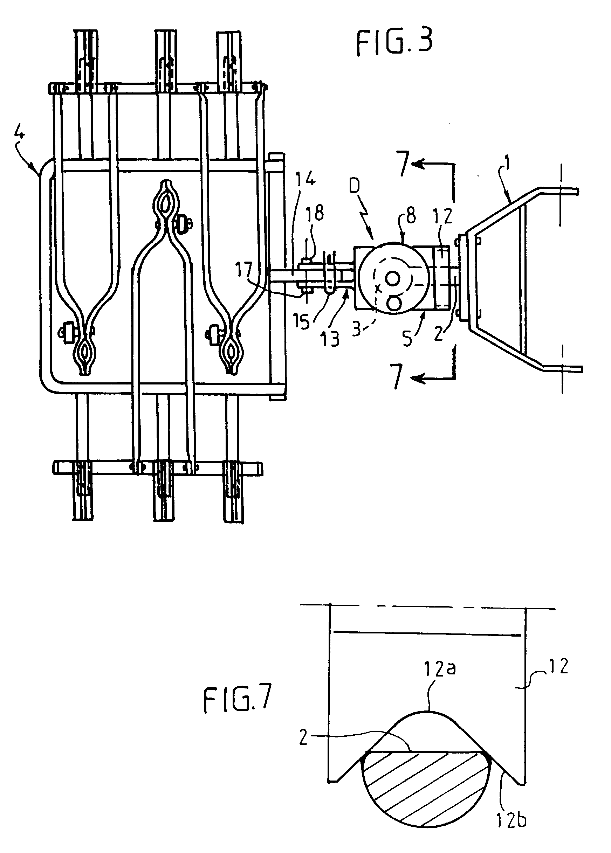

- La figure 3 est une vue en plan du dispositif monté sur une boule d'attelage avec une plate-forme porte-vélo.

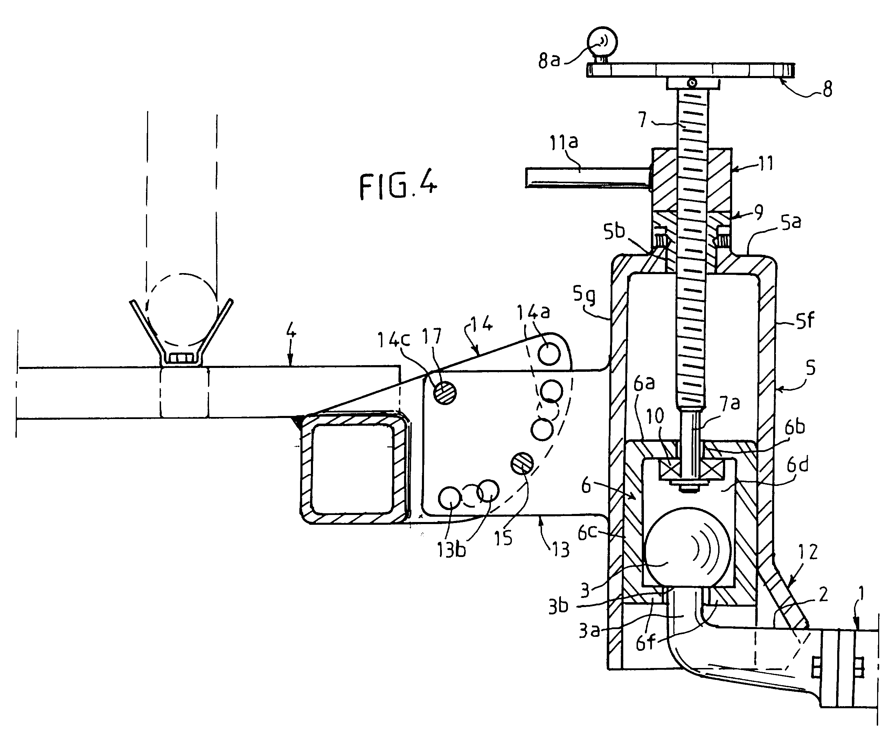

- La figure 4 est une vue en coupe partielle et à grande échelle illustrant le dispositif en position montage.
- La figure 5 est une vue partielle et en perpective illustrant le mode d'introduction du dispositif sur la boule d'attelage.
- La figure 6 est une vue partielle et en coupe illustrant la liaison fixe et verrouillée du dispositif de l'invention sur la boule d'attelage.
- La figure 7 est une vue en coupe selon la ligne A-A de la figure 6 montrant le positionnement par chevauchement du dispositif sur la plate-forme de la boule d'attelage.
- La figure 8 est une vue de côté illustrant le relevage de la plate-forme porte-vélo par rapport au dispositifde l'invention.

Afin de rendre plus concret l'objet de l'invention, on le décrit maintenant d'une manière non limitative illustrée aux figures des dessins.

L'attelage du type conventionnel est référencé dans son ensemble par (1) et s'adapte sur le soubassement du véhicule de manière connue. Il comprend dans sa partie apparente une plate-forme (2) prolongée par la partie boule (3) en forme de rotule et susceptible de recevoir les dispositifs d'attache connus. Compte tenu des charges à retenir, des efforts et sollicitations, la boule et la plate-forme associées sont en acier. La section transversale de la plate-forme est variable.

La plate-forme à soutenir du type porte-vélo est référencée dans son ensemble par (4) et elle est établie de toute manière appropriée, avec un encadrement extérieur, des gouttières de maintien des roues, des potences de retenue sur le cadre de bicyclettes et tous accessoires éventuels.

L'invention vise donc la conception du dispositif d'attache et de fixation de la plate-forme sur la boule d'attelage.

Ce dispositif est référencé dans son ensemble par (D). Ce dispositif a pour fonction de pouvoir s'adapter autour de la boule d'attelage et d'assurer après un mouvement de solidarisation rigide par rapport à la boule et la plate-forme support de celle-ci, le blocage en position ferme et verrouillée de l'ensemble.

Le dispositif comprend ainsi un corps (5) de forme parallélépipédique creux intérieurement avec une face supérieure (5a) agencée avec une ouverture (5b), une face de dessous (5c) ouverte, une face de côté (5d) présentant une ouverture profilée (5e) pour autoriser le passage et la pénétration de la boule d'attelage à l'intérieur du volume dudit corps. Ce demier est susceptible de recevoir intérieurement à coulissement contrôlé un étrier (6) de forme volumétrique parallélépipédique, mais de plus petite hauteur. Cet étrier a la configuration d'un cube par exemple, creux intérieurement avec une face supérieure (6a) présentant une ouverture (6b) susceptible d'être en regard et prolongement de l'ouverture (5b) précitée permettant ainsi le positionnement et l'introduction d'une tige filetée (7) à pas à gauche associée à un volant de manoeuvre (8) ainsi qu'il sera précisé par la suite. Ledit étrier présente une face latérale (6c) ouverte qui est susceptible d'être mise en regard de celle (5d) précitée du corps. Ledit étrier présente en outre, sur sa face de dessous, une découpe (6e) profilée susceptible d'entourer la partie tige support (3a) de la boule d'attelage (3). L'étrier présente ainsi de part et d'autre de la découpe (6e)des zones d'appui (6f) horizontales qui sont susceptibles de venir sous la tête (3b) de la rotule ainsi qu'il sera exposé par la suite.

Le volant de manoeuvre (8) présente une poignée (8a) facilitant sa préhension. Le corps (5) présente à l'endroit de l'ouverture (5b) un écrou (9) directement formé dans ledit corps par taraudage ou par une pièce rapportée et fixée dans ladite ouverture. L'extrémité (7a) de la tige filetée (7) est susceptible de coopérer avec une bague (10) qui vient en appui sous la face supérieure de l'étrier. La tige filetée (7) reçoit par ailleurs, dans la partie située entre l'étrier et le volant, un contre-écrou (11) de blocage actionné par une poignée de manoeuvre (11a).

Sur la face avant (5f), le corps présente une forme en saillie (12) rapportée ou monobloc avec le corps par moulage de fonderie ou autre. Cette forme en saillie à la configuration d'un chapeau, évidée intérieurement en (12a) avec pans inclinés (12b), pour venir chevaucher et s'appuyer sur la partie plate-forme de la boule d'attelage lors de la fixation d'ensemble. La partie arrière (5g) du corps est agencée en forme de chape (13) avec deux ailes (13a) parallèles autorisant le passage et l'introduction d'une forme (14) en saillie établie sur la plate-forme du porte-vélo. La chape est agencée avec une pluralité de trous (13b) orientés en arc de cercle pour coopérer avec une pluralité de trous (14a) établis sur la partie correspondante en saillie (14) précitée. Leur correspondance permet d'insérer une goupille de verrouillage (15) avec linguet (16).

L'articulation entre la chape et la forme en saillie de la plate-forme est obtenue par un axe de liaison (17) traversant des ouvertures (14c) (13c) appropriées. Un écrou de blocage (18) assure le verrouillage en position.

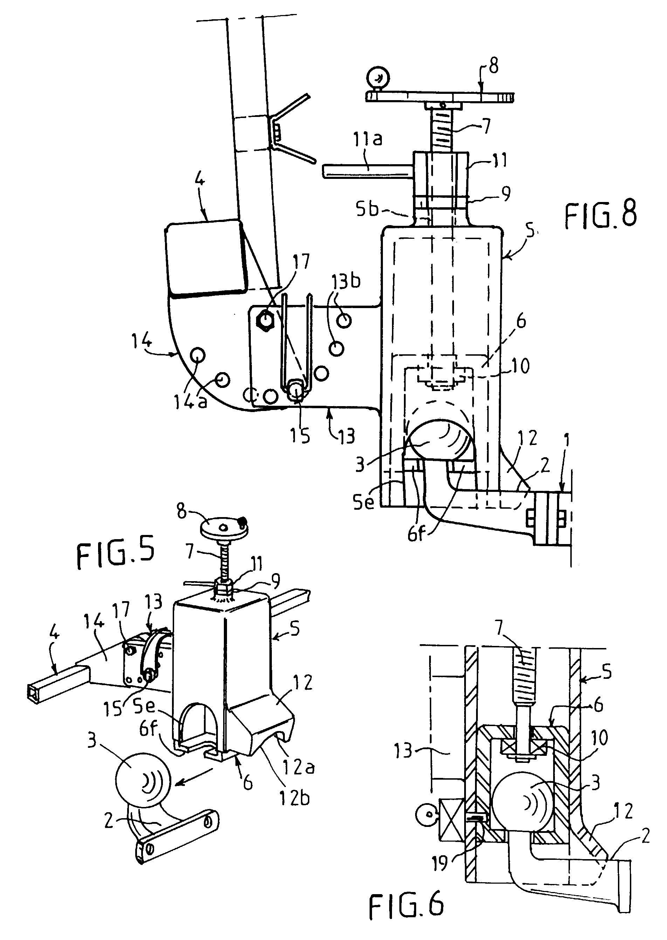

Une autre caractéristique de l'invention vise à assurer un verrouillage en position du dispositif après positionnement ferme et rigide sur la boule d'attelage sans que des tiers puissent démonter inopinément le dispositif. A cet effet, il est prévu l'utilisation d'un moyen de verrouillage (19) en position de l'étrier dans le corps à un niveau déterminé empêchant toute sortie de la boule d'attelage hors du corps. Dans une mise en oeuvre illustrée figure 6, le corps et l'étrier présentent des ouvertures (5g) et (6f) susceptibles d'être en regard tandis qu'un doigt (20), sous l'effet d'une clé de manoeuvre (21), peut permettre le verrouillage en position par pénétration dans les ouvertures précitées.

En variante non illustrée, ledit doigt (20) peut simplement venir en sous appui sous la face de fond de l'étrier.

Il convient dès lors d'exposer le fonctionnement du dispositif de l'invention en se référant aux dessins. En situation de départ (figure 5), l'étrier se trouve, par l'effet de commande du volant de manoeuvre, dans la partie basse du corps, ses ailes horizontales de fond étant dégagées et n'obturant pas l'entrée du corps. Ce corps peut donc être présenté sur la boule d'attelage qui est à position fixe pour venir la coiffer et l'introduire à l'intérieur du volume de l'étrier. A cet instant, le corps est en situation de ballottement. L'opérateur manoeuvre alors le volant qui, par sa tige filetée ayant un pas à gauche, permet le rapprochement de l'étrier dans le fond du corps. La boule d'attelage étant fixe de par son maintien autour de la boule, c'est le corps qui se déplace vers le bas se rapprochant dans un effet de serrage tandis que sa forme évasée extrême formant chapeau vient s'appuyer et chevaucher la plate-forme de liaison entre la boule et l'attelage.

Lorsque le serrage est terminé, l'opérateur peut verrouiller la position en déplaçant le contre-écrou contre la face supérieure du corps. La tige de manoeuvre peut éventuellement être escamotée ensuite. L'opérateur assure ensuite le verrouillage final par l'introduction du doigt sous l'étrier ou dans une ouverture ménagée dans celui-ci. En position de serrage et blocage du dispositif, l'étrier se trouve à l'intérieur du corps et la boule d'attelage n'est plus accessible.

En dernier lieu, le dispositif permet de contrôler la position plane ou non de la plate-forme porte-vélo. La multiplicité des trous formés dans une configuration curviligne sur la face en chape permet de corriger la position de la plate-forme. En outre, celle-ci peut être relevée en cas de non utilisation.

Les avantages ressortent bien de l'invention. On souligne la simplicité mécanique du dispositif et son adaptation à tous attelages. En effet, la forme profilée avant à pans inclinés permet de s'adapter à toutes section s de la plate-forme. On obtient un serrage en trois points, un supérieur pour le blocage de l'étrier dans le corps, et deux autres sur la plate-forme de liaison de l'attelage. La construction est donc particulièrement solide. La sécurité est assurée et le verrouillage offre une inviolabilité suffisante pour décourager d'éventuels voleurs.

Le dispositif selon l'invention s'adapte sur toutes les boules d'attelage.

## Revendications

1. Dispositif d'attache et de fixation de plate-formes ou supports d'articles sur des boules d'attelage, **caractérisé en ce qu**'il comprend un corps (5) de forme parallélépipèdique creux intérieurement présentant dans sa partie basse une face de côté (5d) agencée avec une ouverture profilée (5e) autorisant le passage et la pénétration d'une boule d'attelage (3), et sur sa face avant (5f) une forme profilée formant chapeau (12) susceptible de venir chevaucher et s'appuyer sur la partie plate-forme de la boule d'attelage, **et en ce que** par l'ouverture (5e) dudit corps (5) est introduit un étrier (6) de configuration volumétrique parallélépipédique de plus petite hauteur et susceptible de coulisser à l'intérieur dudit corps, **et en ce que** le coulissement est obtenu par un volant de manoeuvre (8) associé à une tige filetée (7) traversant la partie supérieure du corps, étant solidarisée à l'étrier pour assurer un déplacement relatif du corps par rapport à l'étrier, **et en ce que** ledit étrier présente sur sa face latérale (6c) une ouverture (6b), et sur sa face de fond une découpe (6a) permettant l'introduction autour de la boule d'attelage afin de la coiffer en totalité, **et en ce que** la manipulation du volant de manoeuvre entraîne le blocage du corps de l'étrier sur la boule par effet de traction et le positionnement de la forme en saillie formant chapeau sur ladite plate-forme de la zone d'attelage dans un double appui supplémentaire.

2. Dispositif selon la revendication 1, **caractérisé en ce que** le corps (5) de forme parallélépipèdique présente une face supérieure (5a) agencée avec une ouverture (5b), une face de dessous (5c) ouverte, une face de côté (5d) présentant une ouverture profilée (5e) pour autoriser le passage et la pénétration de la boule (3) ainsi que de l'étrier (6), ladite ouverture (5b) supérieure étant agencée pour constituer une zone formant écrou en vue de la coopération avec la tige.

3. Dispositif selon l'une quelconque des revendications 1 et 2, **caractérisé en ce que** l'étrier (6) présente une face latérale (6c) ouverte susceptible d'être en regard de l'ouverture (5d) formée sur le corps (5), ledit étrier présentant sur sa face de dessous une découpe (6d) profilée susceptible d'entourer la partie tige (3a) support de la boule (3) d'attelage, l'étrier (6) présentant de part et d'autres de la découpe (6e) des zones d'appui (6f) horizontales susceptibles de venir sous la tête (3b) de la boule et en contact avec celle-ci lors de l'effort de serrage.

4. Dispositif selon l'une quelconque des revendications 2 et 3, **caractérisé en ce que** le volant de manoeuvre (8) présente une poignée (8a), **et en ce que** un contre-écrou (11) est monté sur la tige filetée entre ledit volant et la face supérieure du corps, ledit contre-écrou pouvant présenter une poignée de manoeuvre (11a) escamotable après serrage.

5. Dispositif selon l'une quelconque des revendications précédentes, **caractérisé en ce que** le corps (5) présente sur sa face avant (5f) une forme en saillie (12) ayant la configuration d'un chapeau évidé intérieurement (12a) avec des pans inclinés (12b) pour venir chevaucher et s'appuyer sur la partie plate-forme de la boule d'attelage lors de la fixation de l'ensemble.

6. Dispositif selon la revendication 1, **caractérisé en ce que** le corps présente dans sa partie arrière une forme en chape (13) avec des ailes (13a) parallèles autorisant la passage et l'introduction d'une forme (14) en saillie établie sur la plate-forme du porte-vélo, la chape et ladite forme étant agencées avec une pluralité de trous (13b) (14a) orientés en arc de cercle permettant l'insertion d'une goupille de verrouillage selon l'orientation donnée à la plate-forme par rapport au corps, **et en ce que** l'articulation principale entre la forme en saillie de la plate-forme et la chape est assurée par un axe de liaison (17) avec écrou de blocage (18).

7. Dispositif selon la revendication 1, **caractérisé en ce que** le corps (5) est agencé pour recevoir un moyen de verrouillage (19) en position de l'étrier (6) dans le corps (5) à un niveau terminé empêchant toute sortie de la boule d'attelage hors du corps en situation de serrage, lesdits moyens de verrouillage étant escamotables pour libérer l'étrier et autoriser, après manipulation du volant de manoeuvre (8), la libération et la sortie de la boule d'attelage.

8. Dispositif selon la revendication 1, **caractérisé en ce que** le moyen de verrouillage est constitué par un doigt (20) sollicité par une clé de manoeuvre (21), ledit doigt étant disposé dans un passage établi sur la face arrière, en étant susceptible de se déplacer transversalement pour s'ajuster sous la face inférieure de l'étrier et assurer le blocage en position de ce dernier.

9. Dispositif selon la revendication 1, **caractérisé en ce que** le moyen de verrouillage est un doigt (20) assujetti à une clé de manoeuvre (21), ledit doigt étant susceptible de pénétrer dans une ouverture formée sur la face avant de l'étrier, à travers une ouverture établie complémentairement dans la paroi correspondante du corps.
